# EUROPEAN PATENT SPECIFICATION

(11) **EP 3 501 951 B1**
(45) Date of publication and mention of the grant of the patent: **08.04.2020**
(21) Application number: 18198720.7
(22) Date of filing: 04.10.2018
(51) Int. Cl.: B62D 21/14, B62D 21/20, B60P 1/64, B62D 53/06, B62D 63/06

(54) **CONSTRUCTION OF A MOVING PLATFORM DEVELOPED FOR SEMI TRAILS**
KONSTRUKTION EINER BEWEGLICHEN PLATTFORM, DIE FÜR SEMI-TRAILS ENTWICKELT WURDE
CONSTRUCTION D'UNE PLATEFORME MOBILE DÉVELOPPÉE POUR SEMI SENTIERS

(30) Priority: 19.12.2017 TR 201720803
(43) Date of publication of application: 26.06.2019
(73) Proprietor: Tirsan Treyler Sanayi Ve Ticaret Anonim Sirket, 54580 Arifiye/Sakarya (TR)
(72) Inventor: DOGU, CAVÍT CEYHUN, SAKARYA (TR); YENÍLMEZ, ADEM, SAKARYA (TR)
(74) Representative: Yamankaradeniz, Kemal

(56) References cited:
- EP-A1- 3 093 220
- JP-A- H07 277 060
- JP-A- 2013 103 623
- JP-U- S59 192 477

## Description

### Technical Field

The invention relates to a construction developed for use in mobile carrier platforms present in semi-trailer vehicles for carrying load and for positioning mentioned platform. Such a construction is known from EP3093220.

### The Current Status of the Technique

Today, semi-trailers and trailers are widely used for the carriage of loads with specific weights and dimensions. In the semi-trailer vehicles, there are movable platforms that move back and forth on the main chassis and load-bearing by telescopic opening. During the carrying operations, the platform must be locked in order to be positioned and fixed in the semi-trey. However, due to the loads they carry, the movable platforms have difficulties in keeping the trailer stationary during the movement and positioning of the trailer. In most cases, these platforms can be fixed and/or put into the desired position by the force applied by the worker during carrying. This effort leads to the fact that more than one employee works on the transaction and that the loading process cannot be done with a single employee and it leads to significant losses in the workforce.

In the current technique, the container vehicles are manufactured to extend front, middle and rear in line with demand. The front extensible assembly is provided by the movement of the bearing between the upper leg and the bottom plate, which is part of the front extensible platform. However, these bearings often leave the housing, which causes undesirable situations in which the platforms are moved and fixed.

The useful model document TR201102892, which is an example of the current status of the technique, discloses a locking mechanism developed in the carrier trailer systems used in heavy-duty transportation and which enables the fastening of a mobile ramp to the treble. In the document, the pins are moved by means of the bellows in the mechanism to lock the system. However, the locking pins engaged in the document are mounted in the middle to prevent damage to the wheel axles in the trailer during back and forth movement. In this case, since the locking is done in the middle, the positioning and fixing of the movable platform becomes difficult and often cause the locks to be tried more than once without the locks.

As a result, due to the negativity described above and the inadequacy of the existing solutions, a structure developed for use in mobile carrier platforms for carrying cargo with the present invention and providing positioning and/or fixation of the platform is being developed.

### The Purpose of the Invention

The present invention is intended to provide a mechanism for locating movable platforms used in the trailer to meet the requirements described above, which removes all disadvantages and carries additional advantages.

It is a further object of the invention to develop a mechanism that is able to prevent the locks from being retained during carrying and where the loads are correctly positioned.

A further object of the invention is to provide a mechanism for enabling the mobile platforms to be positioned and maintained in a more practical and secure manner within the semi-trailer means.

The present invention, intended to fulfill the purposes described above, is a structure which includes a main frame located on wheels and a first platform which provides forward and backward movement on the main frame, in the telescopic function semi-trailer vehicles that are used in the freight transportation and which can be front and centered according to the load to be carried and its function includes;
- at least one locking channel extending along first platform,
- at least one second platform associated with first platform,
- positioned in a reciprocating manner on the second platform and in a locking channel in mentioned first platform, at least one eccentric bearing assembly providing for mentioned movement of the first platform by the movement within the locking channel.

The structural and characteristic features and all the advantages of the invention will become apparent from the detailed description given below and by the detailed description made with reference to these figures.

### Figures to Help in Understanding the Invention

In order to be able to better understand the advantages of the current invention and the additional advantages of the invention, the following description should be considered:
Figure 1. It is a perspective view of the semi-trailer vehicle used in the current invention.
Figure 2. It is a side perspective view of the first platform developed by the current invention.
Figure 3. It is a side perspective view of the second platform developed by the current invention.
Figure 4. It is a side perspective view of the open position of the locking channel and the eccentric bearing assembly developed by the current invention.
Figure 5. It is a side perspective view of the closed position of the locking channel and eccentric roller assembly developed by the current invention.

### Description of Component Parts

- 1.: Semi trailer vehicle
- 2.: Locking channel
- 3.: First platform
- 4.: Second platform
- 5.: Eccentric bearing assembly
- 6.: Locking mechanism

The drawings do not necessarily have to be scaled and the details that are not necessary to understand the current invention may be omitted. Furthermore, the elements which are at least substantially identical or have at least substantially identical functions are indicated by the same number.

### Detailed Description Of The Invention

In this detailed description, a structure for the use of movable carrier platforms in semi-trailer vehicles used for the purpose of carrying load according to the invention and providing the positioning of the platform, is explained only for a better understanding of the subject and without any limiting effects.

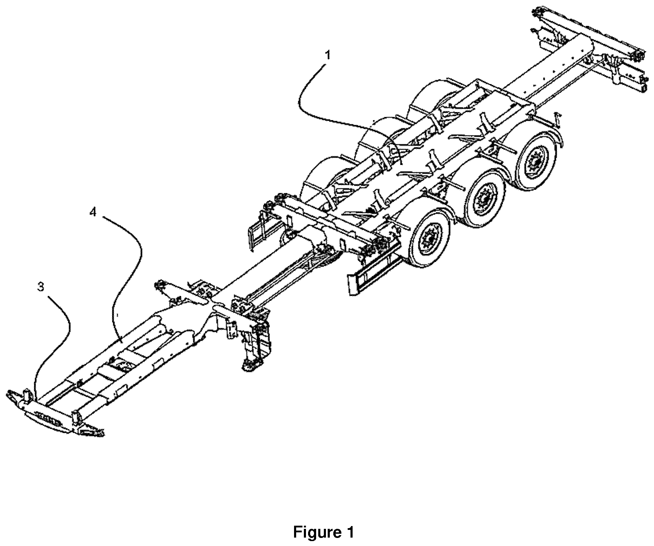

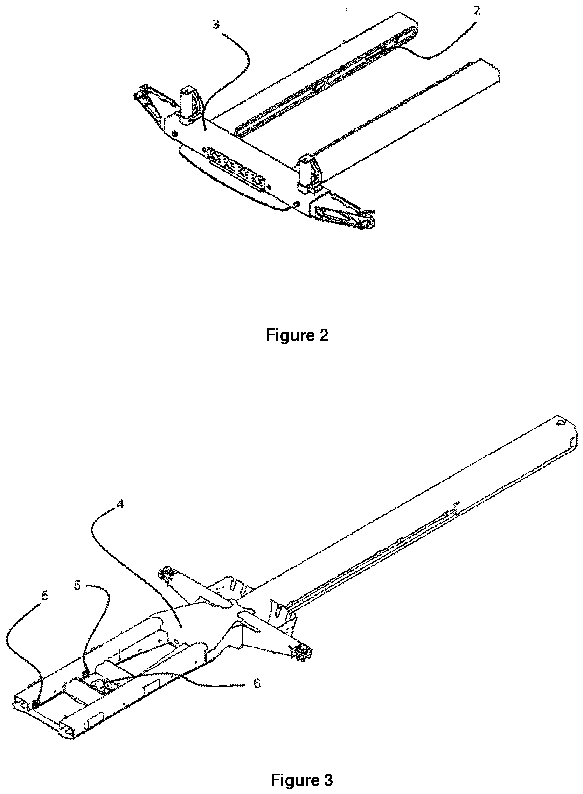

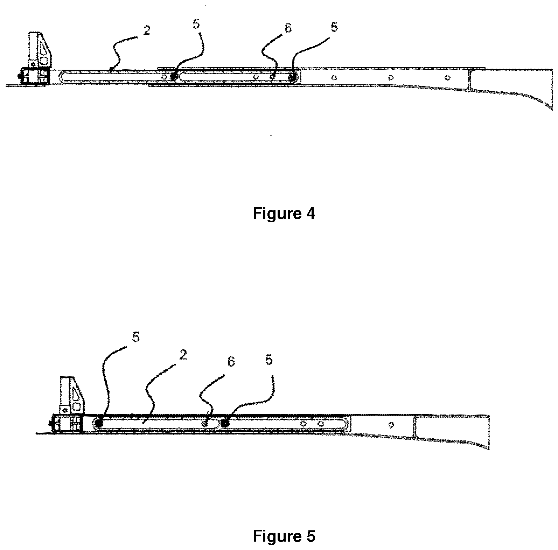

The current invention is related to the platform assembly found in semi-trailer vehicles (1) with telescopic function, which can be used for the carrying of goods and which can extend from the front and middle according to the load, includes at least one locking channel (2) in mentioned platform assembly and a linear movement within mentioned locking channel (2) and at least one eccentric bearing assembly (5) which provides movement of the first platform (3) to fulfill the purposes described above that sample views given in Figure 1-5.

The system developed by the current invention consists of a container type that the container-carrying semi-trailer vehicles (1) will carry and the platform assemblies that can extend from the front, center and rear depending on the length. Semi-trailer vehicles (1) have a mainframe positioned on wheels and multiple platforms able of a forward and backward movement on the main frame. These platforms can be adjusted by telescopic opening on the main frame.

In the current invention, there is a first platform (3) which can be moved in parallel with the vehicle, preferably a telescopic vehicle, which forms the front region of the semi-trailer vehicle (1) and depends on the load it carries, A locking channel (2) is present along the first platform (3). In the system developed by the current invention, there is also a second platform (4) forming the body of the semi-trailer vehicle (1) after the chassis area and forming the middle region of the semi-trey vehicle (1). Eccentric bearing assembly (5) of the lower parts of the second platform (4) is positioned in such a way that it is movable back and forth in the locking channel (2) by engaging the locking channel (2) of the first platform (3). This movement made by the eccentric bearing assembly (5) ensures the movement and positioning of the first platform (3) carried out by transferring to the first platform (3) the movement of the locking channel (2) The eccentric bearing assembly (5) constitutes a bearing positioned on the second platform (4).

In the current construction the movement of the oppositely positioned bearings on the second platform (4) can be provided in a continuous plane with the locking channel (2) extending along the first platform (3), In this way, the bearings can be prevented from getting out of their places even in cases caused by the slope of the surface or the weight of the load being carried. Therefore, more precise position adjustments can be made. In this system, where the positioning process can be done precisely, it is prevented from deforming the lock systems easily because the load on the lock systems is reduced.

In an exemplary of the system developed by the current invention, a channel (2) with a locking feature is used. Thus, thanks to the locking channel structure (2) in the system, each eccentric bearing assembly (5) is classified and positioned separately. As the bearings are limited and the contact point is separate for each bearing, the safety of these platforms is ensured during the load carrying.

The system developed by the present invention preferably comprises a locking mechanism which is positioned on the second platform (4) in which the first platform (3) is brought to a predetermined position and/or secured in its current position. The locking mechanism (6) is connected to the eccentric bearing assembly (5) in the second platform (4), thus, the locking mechanism (6) is more stable to operate.

With the bearing provided by the channel (2) with locking feature of an exemplary system developed by the current invention, the eccentric bearing assembly (5) is easily seated in the slot on the slot, thus, the position of the eccentric bearing assembly (5) is easily understood by the user. In this way, a platform structure can be developed that carrying can be done easily by a single person.

## Claims

1. Construction of a semi trailer vehicle (1) with telescopic function, 2 which can be used in the freight transportation and can be used front and/or centered according to the load to be carried, comprising; 3 - a main frame located on wheels, and 4 - a first platform (3) which provides forward and backward movement on the main frame, **characterized in that** said construction comprises; - at least one locking channel (2) extending along said first platform (3) - at least one second platform (4) forming the body of the semi trailer vehicle and associated with the first platform, - at least one eccentric bearing assembly (5) positioned on the second platform (4) in such a way that said can move forward and backward in the locking channel (2) of said first platform (3) and provide the movement of said first platform (3) with its movement within said locking channel (2).

2. Construction of a semi trailer vehicle according to claim 1, **characterized in that** it comprises a plurality of oppositely positioned eccentric bearing assemblies (5) on the second platform (4).

3. Construction of a semi trailer vehicle according to claim 1, **characterized in that** it includes a locking mechanism (6) positioned on the second platform (4) and enabling the first platform (3) to be fixed in its current position.

4. Construction of a semi trailer vehicle according to claim 3, **characterized in that** said locking mechanism (6) is connected with the eccentric bearing assembly (5) positioned on the second platform (4).

5. Construction of a semi trailer vehicle according to claim 1, **characterized in that** said first platform (3) is positioned in the front region of the semi-trailer vehicle (1).

6. Construction of a semi trailer vehicle according to claim 1, **characterized in that** said second platform (4) is positioned in the middle region of the semi-trailer vehicle (1).

7. Construction of a semi trailer vehicle according to claim 1, **characterized in that** said first platform (3) moves back and forth on the horizontal plane.

8. Construction of a semi trailer vehicle according to claim 1, **characterized in that** said second platform (4) moves back and forth on the horizontal plane.

9. Construction of a semi trailer vehicle according to claim 1, **characterized in that** said eccentric bearing assembly (5) moves back and forth on the horizontal plane.

10. Construction of a semi trailer vehicle according to claim 1, **characterized in that** said eccentric bearing assembly (5) is classified and positioned separately in said locking channel (2).

## Patentansprüche

1. Konstruktion eines Sattelanhängerfahrzeugs (1) mit Teleskopfunktion, 2 die im Güterverkehr verwendet werden kann und die gemäß der transportierten Last vorne und/oder zentriert verwendet werden kann, umfassend; 3 - ein Chassis, das sich auf Rädern befindet, und 4 - eine erste Plattform (3), die eine Vorwärts- und Rückwärtsbewegung auf dem Chassis bereitstellt, **dadurch gekennzeichnet, dass** die genannte Konstruktion folgendes umfasst; - mindestens einen Verriegelungskanal (2), der sich entlang der ersten Plattform (3) erstreckt - wobei mindestens eine zweite Plattform (4) den Körper des Sattelanhängerfahrzeugs bildet und der ersten Plattform zugeordnet ist, - mindestens eine exzentrische Lagereinheit (5), die an der zweiten Plattform (4) so positioniert ist, dass sie sich in dem Verriegelungskanal (2) der ersten Plattform (3) vor und zurück bewegen kann, und Bereitstellen der Bewegung der ersten Plattform (3) mit deren Bewegung in dem Verriegelungskanal (2).

2. Konstruktion eines Sattelanhängerfahrzeugs nach Anspruch 1, **dadurch gekennzeichnet, dass** sie eine Mehrzahl entgegengesetzt positionierter exzentrischer Lagereinheiten (5) an der zweiten Plattform (4) umfasst.

3. Konstruktion eines Sattelanhängerfahrzeugs nach Anspruch 1, **dadurch gekennzeichnet, dass** sie eine Verriegelungsmechanismus (6) aufweist, der an der zweiten Plattform (4) positioniert ist und eine Fixierung der ersten Plattform (3) an ihrer aktuellen Position ermöglicht.

4. Konstruktion eines Sattelanhängerfahrzeugs nach Anspruch 3, **dadurch gekennzeichnet, dass** der Verriegelungsmechanismus (6) mit der an der zweiten Plattform (4) positionierten exzentrischen Lagereinheit (5) verbunden ist.

5. Konstruktion eines Sattelanhängerfahrzeugs nach Anspruch 1, **dadurch gekennzeichnet, dass** die erste Plattform (3) in dem vorderen Bereich des Sattelanhängerfahrzeugs (1) positioniert ist.

6. Konstruktion eines Sattelanhängerfahrzeugs nach Anspruch 1, **dadurch gekennzeichnet, dass** die zweite Plattform (4) in dem mittleren Bereich des Sattelanhängerfahrzeugs (1) positioniert ist.

7. Konstruktion eines Sattelanhängerfahrzeugs nach Anspruch 1, **dadurch gekennzeichnet, dass** sich die erste Plattform (3) in der horizontalen Ebene vor und zurück bewegt.

8. Konstruktion eines Sattelanhängerfahrzeugs nach Anspruch 1, **dadurch gekennzeichnet, dass** sich die zweite Plattform (4) in der horizontalen Ebene vor und zurück bewegt.

9. Konstruktion eines Sattelanhängerfahrzeugs nach Anspruch 1, **dadurch gekennzeichnet, dass** sich die exzentrische Lagereinheit (5) in der horizontalen Ebene vor und zurück bewegt.

10. Konstruktion eines Sattelanhängerfahrzeugs nach Anspruch 1, **dadurch gekennzeichnet, dass** die exzentrische Lagereinheit (5) klassifiziert und separat in dem Verriegelungskanal (2) positioniert ist.

## Revendications

1. Construction d'un véhicule semi-remorque (1) à fonction télescopique, 2 qui peut être utilisé pour le transport de marchandises et qui peut être utilisé à l'avant et/ou centré en fonction de la charge à transporter, comprenant : 3 - un châssis principal situé sur des roues, et 4 - une première plate-forme (3) qui permet un mouvement vers l'avant et vers l'arrière sur le châssis principal, **caractérisée en ce que** ladite construction comprend ; - au moins un canal de verrouillage (2) s'étendant le long de ladite première plate-forme (3), - au moins une seconde plate-forme (4) formant la carrosserie du véhicule semi-remorque et associée à la première plate-forme, - au moins un ensemble de palier excentrique (5) positionné sur la seconde plate-forme (4) de sorte que ladite plate-forme puisse se déplacer vers l'avant et vers l'arrière dans le canal de verrouillage (2) de ladite première plate-forme (3) et assurer le mouvement de ladite première plate-forme (3) avec son mouvement à l'intérieur dudit canal de verrouillage (2).

2. Construction d'un véhicule semi-remorque selon la revendication 1, **caractérisée en ce qu'**elle comprend une pluralité d'ensembles de paliers excentriques (5) positionnés de manière opposée sur la seconde plate-forme (4).

3. Construction d'un véhicule semi-remorque selon la revendication 1, **caractérisée en ce qu'**elle comprend un mécanisme de verrouillage (6) positionné sur la seconde plate-forme (4) et permettant à la première plate-forme (3) d'être fixée dans sa position actuelle.

4. Construction d'un véhicule semi-remorque selon la revendication 3, **caractérisée en ce que** ledit mécanisme de verrouillage (6) est relié à l'ensemble de palier excentrique (5) positionné sur la seconde plate-forme (4).

5. Construction d'un véhicule semi-remorque selon la revendication 1, **caractérisée en ce que** ladite première plate-forme (3) est positionnée dans la région avant du véhicule semi-remorque (1).

6. Construction d'un véhicule semi-remorque selon la revendication 1, **caractérisée en ce que** ladite seconde plate-forme (4) est positionnée dans la région centrale du véhicule semi-remorque (1).

7. Construction d'un véhicule semi-remorque selon la revendication 1, **caractérisée en ce que** ladite première plate-forme (3) effectue un mouvement de va-et-vient sur le plan horizontal.

8. Construction d'un véhicule semi-remorque selon la revendication 1, **caractérisée en ce que** ladite seconde plate-forme (4) effectue un mouvement de va-et-vient sur le plan horizontal.

9. Construction d'un véhicule semi-remorque selon la revendication 1, **caractérisée en ce que** ledit ensemble de palier excentrique (5) effectue un mouvement de va-et-vient sur le plan horizontal.

10. Construction d'un véhicule semi-remorque selon la revendication 1, **caractérisée en ce que** ledit ensemble de palier excentrique (5) est classé et positionné séparément dans ledit canal de verrouillage (2).
